# EUROPÄISCHE PATENTSCHRIFT

(11) **EP 2 670 694 B1**
(45) Veröffentlichungstag und Bekanntmachung des Hinweises auf die Patenterteilung: **18.03.2015**
(21) Anmeldenummer: 12702007.1
(22) Anmeldetag: 27.01.2012
(51) Int. Cl.: B65H 75/14, G02B 6/44

(54) **KABELTRÄGER**
CABLE CARRIER
PORTE-CÂBLE

(30) Priorität: 03.02.2011 CH 202112011
(43) Veröffentlichungstag der Anmeldung: 11.12.2013
(73) Patentinhaber: Huber+Suhner AG, 9100 Herisau (CH)
(72) Erfinder: SUTTER, Erich, CH-9107 Urnäsch (CH); BRUNE, Frank, CH-8577 Schönholzerswilen (CH)
(74) Vertreter: Rentsch Partner AG
(86) Internationale Anmeldenummer: PCT/EP2012/051361
(87) Internationale Veröffentlichungsnummer: WO 2012/104223

(56) Entgegenhaltungen:
- DE-U1- 8 018 161
- NL-C1- 1 022 062
- US-A- 4 685 636
- US-A- 4 802 638
- US-A- 5 992 787
- US-A1- 2005 148 313
- US-A1- 2006 151 654
- US-A1- 2008 283 651
- US-S1- D 631 730

## Beschreibung

Die Erfindung betrifft einen Kabelträger, der als Transportmittel und Montagehilfe für ein aufwickelbares Kabel, insbesondere für ein optisches Leiterkabel, geeignet ist und eine Spuleneinheit aufweist, um deren Umfang das Kabel vorzugsweise in ringförmigen Schlaufen aufwickelbar ist, sowie eine Anordnung zur Aufbewahrung und/oder Installation eine Kabels, die einen solchen Kabelträger und ein in dem Kabelträger gelagertes Kabel umfasst.

Üblicherweise werden elektrische oder optische Kabel vor ihrer Installation in Gebäuden oder anderen Einrichtungen auf Kabeltrommeln oder -rollen aufgewickelt und am Ort der Installation von diesen abgewickelt, ggf. abgelängt und an vorgesehene Geräte oder Buchsen angeschlossen. Insbesondere bei Lichtwellenleiterkabeln müssen dabei verschiedene Anforderungen berücksichtigt werden, wie etwa ein knickfreies Lagern und Rollen, eine ausreichende Zugentlastung oder ein Schutz für zugehörige Anschlusseinrichtung.

Zur Installation von optischen Kabeln ist es oftmals erforderlich, dass diese in Gebäuden in dafür vorgesehenen Schächten oder in Wänden eingelassenen Leerohren von einem Raum in einen anderen oder auch in ein anderes Stockwerk verlegt werden. Hierfür wird ein Kabelende an einer Seite in eine Leitung eingeschoben und an der anderen Seite der Leitung aus dieser heraus gezogen, wobei das Kabel von seinem Träger abgewickelt wird. In der Regel erfolgt das Abwickeln des Kabels unbeaufsichtigt, da der Installateur im anderen Raum beschäftigt ist. Es ist daher wichtig, dass ein Kabelträger ein problemloses Abwickeln des Kabels ermöglicht, ohne dass es dabei zu einem Abknicken, Hängenbleiben oder Verknoten kommen kann. Gleichzeitig soll das Kabel sicher transportiert und gelagert werden können. Ferner soll das Kabel möglichst ohne weitere Vorbereitungsschritte unmittelbar aus einer Transport- oder Lagerverpackung heraus installiert werden können. Anschlussgeräte oder - stecker sind vorteilhafter Weise bereits am Kabel montiert.

Aus dem Stand der Technik sind verschiedene Systeme zur Lagerung und Handhabung von Kabeln, insbesondere von optischen Kabeln bekannt, welche eine einfache und schnelle Installation ermöglichen sollen. Aus der EP 0582745 A1 ist beispielsweise ein Verkabelungs- und Installationssystem bekannt, bei dem ein optisches Kabel an seinen Enden bereits mit zwei Anschlusseinheiten versehen ist und auf einer Kabeltrommel aufgewickelt ist. Dabei kommen die Anschlussenden neben der Kabeltrommel zwischen einem Flansch der Trommel und einer daran beabstandet angebrachten Schutzscheibe zu liegen, welche die Anschlusseinheiten schützt. Bei der Installation kann ein Anschlussende ergriffen werden und das Kabel an diesem Ende von der Kabeltrommel abgerollt werden.

Ferner ist in der US 4,913,369 eine Aufbewahrungs- und Verteilerhaspel gezeigt, die zwischen einem oberen und einem unteren Flansch eine Trommel mit einer Umfangsfläche umfasst, so dass ein Kabel zwischen den Flanschen auf der Umfangsfläche aufgerollt werden kann. Die Enden des Kabels, an welchen Anschlüsse vorgesehen sind, können durch einen radial verlaufenden Schlitz im oberen Flansch auf die Oberfläche des Flansches geführt werden, so dass die Anschlüsse in Vertiefungen auf der Flanschoberfläche eingelegt werden können. Auf der Flanschoberfläche ist an einem Scharnier eine klappbare Abdeckung befestigt, die über die Vertiefungen geklappt werden und diese verschliessen kann. Am unteren Flansch ist auf dessen äusserer Oberfläche eine Halterung vorgesehen, in welcher die Trommel drehbar gelagert ist. Zum Abwickeln eines Kabels kann die Aufbewahrungs- und Verteilerhaspel auf die Halterung gestellt werden. Anschliessend wird die Abdeckung aufgeklappt und ein Kabelende aus einer Vertiefung entnommen. Beim Ziehen am Kabelende dreht die Trommel auf der Halterung und das Kabel wird abgewickelt.

Bei diesen bekannten Systemen mit einer Kabeltrommel bleibt das Kabel von aussen zugänglich während es auf der Trommel aufgerollt ist. Das Kabel ist daher äusseren Einflüssen ausgesetzt und kann dadurch beschädigt oder verschmutzt werden.

Aus der US 5,165,543 ist wiederum eine Kabeltrommel mit einem darauf aufgewickelten Kabel bekannt, die in eine Schutzhülle eingerollt ist. Zwischen der Schutzhülle und Flanschen der Kabeltrommel ist ein Zwischenraum vorgesehen, durch den das Kabel von der Trommel abgewickelt und aus der Schutzhülle heraus gezogen werden kann. Die Schutzhülle wird erst nach dem Aufwickeln des Kabels um die herum Trommel angebracht und muss mit eigenen Befestigungsmitteln gehalten werden. Bei einer zu losen Umhüllung kann die Trommel aus der Schutzhülle rutschen und bei einer zu festen Umhüllung können Schwierigkeiten beim Abwickeln und Herausziehen des Kabels auftreten.

Die US 6,145,781 zeigt eine Kabelrolle, die innerhalb einer Schachtel untergebracht und auf einer Scheibe gelagert ist. Die Scheibe kann auf ihrer Auflagefläche in der Schachtel rotieren. Hierfür können Vorkehrungen für eine geringe Reibung zwischen Scheibe und Schachtel getroffen werden. Die Schachtel weisst an einer Seite, die dem Umfang der Kabelrolle gegenüber liegt, eine Öffnung auf, durch die ein Ende des Kabels aus der Schachtel gezogen werden kann, um das Kabel aus der Schachtel heraus abzuwickeln. Dabei kann zwar die Reibung am Boden der Schachtel reduziert werden, jedoch muss das Kabel durch Zug aus der Öffnung gezogen werden, wobei es am Rand der Öffnung reibt und an diesem knicken kann. Zudem weist die Schachtel ein nicht genutztes Totvolumen auf, wodurch bei der Lagerung solcher Kabelschachteln ein grosser Platzbedarf entsteht.

Von dem Hersteller Diamond SA ist eine FTTH-Box (Fibre to the Home - Box) bekannt, die aus einer aus Karton gefertigten Schachtel und einer darin gelagerten Kabelrolle besteht. Das Kabel weist eine vorbestimmte Länge auf und an dessen Enden sind Anschlussstecker vormontiert. Ein Ende wird innerhalb der Kabelrolle gelagert und das andere wird in einem am Rand der Schachtel vorgesehenen separaten Fach untergebracht. Das Kabel kann aus der Box heraus abgerollt und in von einer Person allein in einen Schacht eingeführt werden. Ferner sind aus der US 4,846,343 und US 5,802,237 Aufbewahrungsbehälter für optische Kabel bekannt, die aus einer um ein Scharnier aufklappbaren Kabelhülle bestehen. Im Inneren der Hülle ist ein ringförmiges Fach zum Einlegen eines aufgerollten Kabels vorgesehen. Ferner sind Einlegefächer für die Kabelenden und ggf. daran angeordnete Stecker vorgesehen. Zur Installation des Kabels wird die Hülle aufgeklappt und das Kabel entnommen, so dass es anschliessend abgewickelt und verlegt werden kann. Mit diesen Aufbewahrungsbehältern ist es nicht möglich, das Kabel geordnet sukzessive aus dem Behälter heraus abzurollen.

Der US 4,685,636 offenbart einen Kabelträger gemäß dem Oberbegriff des Anspruchs 1.

Es ist eine Aufgabe der vorliegenden Erfindung einen Kabelträger und eine Anordnung aus einem solchen Kabelträger und einem Kabel bereitzustellen, auf dem das Kabel vor Verschmutzungen und Beschädigungen weitgehend geschützt ist, der das Kabel mit zugehörigen Anschlüssen und Geräten einsatzbereit aufbewahrt, ein problemloses Abwickeln und Installieren des Kabels ermöglicht, platzsparend ausgestaltet ist und kostengünstig hergestellt werden kann.

Diese Aufgabe wird von der vorliegenden Erfindung durch einen Kabelträger nach Anspruch 1 und eine Anordnung nach Anspruch 15 gelöst. Vorteilhafte Ausgestaltungen und unterschiedliche Varianten gehen aus den Unteransprüchen hervor.

Ein Kabelträger nach der vorliegenden Erfindung, der als Transportmittel und Montagehilfe für ein aufwickelbares Kabel dienen kann, weist eine Spuleneinheit auf, um deren Spulenumfangsbereich ein Kabel z. B. in spiralförmigen Schlaufen aufwickelbar ist. Der Spulenumfangsbereich weist ein erstes und ein zweites axial gegenüberliegendes Ende auf, wovon jeweils eine Umfangswand zumindest teilweise über den Spulenumfangsbereich abragt. Das heisst, eine Umfangswand steht von einem Ende des Spulenumfangsbereichs derart geformt ab, dass sie den Spulenumfangsbereich zumindest teilweise überdeckt. Die Umfangswand umgibt den Spulenumfangsbereich vorteilhafter Weise rings um den Umfang der Spuleneinheit. Beispielsweise kann eine Umfangswand derart gebogen sein, dass sie teilweise parallel zum Spulenumfangsbereich verläuft und diesen konzentrisch umgeben kann. Zwischen dem Spulenumfangsbereich und den Umfangswänden verbleibt ein Zwischenraum, der ein von dem Spulenumfangsbereich und den Umfangswänden ausgebildetes Kabelfach bildet. Zwischen den Umfangswänden verbleibt ferner ein um den Spulenumfangsbereich umlaufender Umfangsschlitz zum Abwickeln des Kabels aus dem Kabelfach. Der Umfangsschlitz ist im Wesentlichen zwischen den Rändern der Umfangswände ausgebildet. Die Breite des Umfangsschlitzes kann auf die Dicke eines Kabels abgestimmt werden, dass in dem Kabelträger untergebracht werden soll, oder der Umfangsschlitz kann durch an einander anliegende Umfangswände gebildet werden.

Eine Anordnung nach der vorliegenden Erfindung zur Aufbewahrung und/oder Installation eines Kabels umfasst einen Kabelträger, wie oben beschrieben, und ein in dem Kabelträger gelagertes Kabel.

Bei einem Kabelträger und der Anordnung nach der vorliegenden Erfindung ist das auf der Spuleneinheit aufgewickelte Kabel von den Umfangswänden abgedeckt und wird von diesen vor direktem Zugriff oder äusseren Einwirkungen geschützt. Das Kabel kann in diesem Transport- oder Lagerzustand problemlos aufbewahrt werden und es können mehrere Kabelträger auf- oder nebeneinander gestapelt werden. Zur Installation des Kabels kann ein Kabelende aus dem Kabelfach entnommen und wie oben beschrieben in eine Kabelleitung eingeführt werden. Beim Abwickeln des Kabels durch Zug am Kabelende dreht sich der Kabelträger und das Kabel wird ringsum durch den umlaufenden Umfangsschlitz aus dem Kabelfach ausgegeben. Dabei ist es vorteilhaft, dass der aufgewickelte Kabelteil relativ zum Kabelträger in Ruhe bleibt und somit keiner Beanspruchung ausgesetzt ist. Es entsteht kaum Reibung zwischen Kabel und Kabelträger. Zugleich ist das auf dem Kabelträger verbleibende Kabel zu jeder Zeit durch die Umfangswände geschützt.

Der Kabelträger ist im Wesentlichen aus zwei Trägerschalen zusammengesetzt. Diese Trägerschalen können zwei Halbschalen des Kabelträgers bilden, die den Kabelträger senkrecht zur Achse der Spuleneinheit halbieren, und können z. B. tellerartig mit rundem Umfang geformt sein. Grundsätzlich kann eine Trägerschale einstückig ausgebildet oder auch aus mehren Einzelelementen aufgebaut sein. Beispielsweise kann eine Trägerschale eine runde Basisfläche aufweisen, von der die Spuleneinheit oder ein Teil davon zentral abragt. Vorzugweise werden die Trägerschalen mit einem Tiefziehverfahren aus Kunststofffolien hergestellt. Es ist auch möglich, die Trägerschalen durch ein Spritzgussverfahren zu fertigen. Vorzugsweise werden die Trägerschalen aus transparentem Material hergestellt, so dass der Inhalt des Kabelträgers von aussen sichtbar ist. Somit kann eine Inhaltskontrolle erfolgen, ohne den Kabelträger öffnen zu müssen.

Die Trägerschalen können entlang einer gemeinsamen Mittelachse, z. B. der Achse der Spuleneinheit, aufeinander gesetzt werden, so dass die Umfangswände der beiden Trägerschalen einander gegenüber stehen. Somit ragen die von den Enden des Spulenumfangsbereichs abstehenden Umfangswände symmetrische über den Spulenumfangsbereich. In verbundenem Zustand können die zwei Trägerschalen gemeinsam die Spuleneinheit und den Spulenumfangsbereich des Kabelträgers ausbilden. Hierfür weisen die beiden Trägerschalen jeweils einen zumindest annähernd zylindrischen Bereich um eine Mittelachse der Trägerschalen auf. Der zylindrische Bereich kann sich aus mehreren Erhebungen von der Basisfläche um die Mittelachse herum zusammensetzen, wobei die Erhebungen Funktionselemente des Kabelträger ausbilden können, wie etwa Aufnahmefächer oder Kabelführungen, wie nachfolgend beschrieben wird. Die zylindrischen Bereiche, bzw. die Erhebungen, kommen in zusammengesetztem Zustand der Trägerschalen derart aufeinander, bzw. aneinander anschliessend, zu liegen, dass sich ihre Umfangsbereiche zu einem gemeinsamen Spulenumfangsbereich ergänzen und eine Umfangsfläche bilden um die das Kabel aufgewickelt werden kann.

Die Trägerschalen können zumindest im Umfangsbereich des Kabelfachs spiegelsymmetrisch ausgebildet sein. Vorzugsweise sind die Trägerschalen auch in den zylindrischen Bereichen des Spulenumfangsbereichs spiegelsymmetrisch ausgestaltet. Grundsätzlich können die Trägerschalen zumindest annähernd vollständig spiegelsymmetrisch geformt sein. Somit können die Schalen bei gleicher Orientierung in einander gelegt werden. Bei spiegelsymmetrischer Anordnung können die Trägerschalen mit einander verbunden werden und gemeinsam den Kabelträger bilden. Aufgrund der spiegelsymmetrischen Ausgestaltung der Trägerschalen ist bei der Herstellung der Schalen nur ein Werkzeug erforderlich, wodurch die Herstellungskosten niedrig gehalten werden können.

Zur Verbindung der Trägerschalen kann eine Verbindungsvorrichtung vorgesehen sein, mit der die zwei Trägerschalen vorzugsweise lösbar verbindbar sind. Die Verbindungsvorrichtung kann als kraftschlüssige Verbindung, wie etwa einer Steck- oder Klemmverbindung, ausgebildet sein. Beispielsweise können in einer der Trägerschalen auf einer Innenfläche Löcher, Einschnitte oder sonstige Vertiefungen vorgesehen sein, während an der anderen Trägerschale auf einer gegenüber den Vertiefungen liegenden Innenfläche komplementär angeordnete Stifte, Bolzen oder sonstige Vorsprünge vorgesehen sind, die kraftschlüssig in die Löcher, Einschnitte oder Vertiefungen eingreifen können. Die Verbindungsvorrichtung ist hierfür vorzugsweise zwischen aufeinander liegenden Flächen der Trägerschalen des Kabelträgers vorgesehen. Alternativ kann auch eine Haft-, Schnapp- oder Rastverbindung vorgesehen werden.

In verbundenem Zustand bilden die zwei Trägerschalen zwischen sich den Umfangsschlitz des Kabelfachs aus. Hierfür können die Umfangswände nur soweit über den Spulenumfangsbereich hervorstehen, dass sie in verbundenem Zustand der Trägerschalen die gegenüberliegende Umfangswand nicht berühren, sondern einen rund um die Spuleneinheit umlaufenden Spalt zwischen den Randbereichen der Umfangswände frei lassen. Dabei kommen die Randbereiche der Umfangswände vorzugsweise zumindest annähernd parallel zu einander zu liegen. Alternativ können die Umfangswände der Trägerschalen einander berühren oder auch überlappen und im Randbereich, an dem sie sich berühren flexibel ausgebildet sein. Die Randbereiche bilden somit eine Art flexibler Verschlusslippen, die das Kabelfach verschliessen und sich in einfacher Weise aufbiegen können, wenn ein Kabel zum Abwickeln durch sie hindurch und an ihnen entlang gezogen wird. Dadurch kann auch ein ungewolltes Abwickeln des Kabels vermieden werden.

An einem der Randbereiche der Umfangswände kann wenigstens ein Haltemittel für einen aussen liegenden Kabelendbereich eines im Kabelfach aufgewickelten Kabels angeordnet sein. Das Haltemittel kann beispielsweise ein Klemmmittel sein, in das der Kabelendbereich eingeklemmt werden kann. Es kann etwa ein Schlitz im Randbereich vorgesehen sein. Oder es kann eine Rille entlang des Umfangs des Randbereichs vorgesehen sein, in die das Kabel geklemmt werden kann. Sofern ein Stecker oder sonstiges Endgerät am Kabelendbereich angeschlossen ist, kann dieses beispielsweise inner- oder ausserhalb des Kabelfachs verbleiben, während der Kabelendbereich am Randbereich gehalten wird. Es ist auch möglich im Randbereich ein Ablagefach vorzusehen, in dem der Stecker oder ein sonstiges Endgerät untergebracht und aus dem es entnommen werden kann.

Alternativ kann ein Kabelendbereich aus dem Kabelfach herausgeführt und beispielsweise an einer Ober- oder Unterseite des Kabelträgers aussen angeordnet werden. Das Kabel kann hierfür durch den Umfangsschlitz nach aussen gebracht werden und beispielsweise durch Einkerbungen im Randbereich einer Umfangswand geführt werden. An der Aussenseite einer Trägerschale kann ein Kanal angeordnet, z. B. in die Oberfläche eingelassen sein, der sich wendelartig um die Trägerschale zu deren Ober-, bzw. Unterfläche, erstreckt, so dass das Kabel nicht geknickt wird. Sofern am Kabelende ein Stecker oder anderes Endgerät angeschlossen ist, kann hierfür ein Haltefach an der Aussenseite der Trägerschale vorgesehen werden, welches den Stecker oder das Endgerät aufnimmt. Dadurch kann dieser in der Oberfläche versenkt werden. Bei einem nach aussen geführten Stecker oder Endgerät, kann diese leicht von einem Anwender des Kabelträgers identifiziert werden, ohne dass der Kabelträger geöffnet werden muss. Fern kann das aussen liegende Kabelende leicht aus der Einkerbung oder dem Haltekanal entnommen werden, um das Kabel aus dem Kabelträger abzuwickeln.

In wenigstens einer Trägerschale ist in einem Bereich innerhalb des Spulenumfangsbereichs wenigstens ein Aufnahmefach zur Aufnahme eines Anschlussgeräts, das sich an ein Kabelende anschliesst, ausgebildet.

Ein solches Aufnahmefach kann z. B. durch eine entsprechend geformte Erhebungen aus der Basisfläche einer Trägerschale gebildet werden, die innerhalb des Spulenumfangsbereich liegen und zudem den zylindrischen Bereich für die Spuleneinheit bilden. Die Ausformung eines Aufnahmefachs kann auch als Aussparung oder Vertiefung in einer Verbindungsfläche einer Trägerschale betrachtet werden, wobei die Verbindungsfläche auf einer entsprechenden Verbindungsfläche der gegenüberliegenden Trägerschale aufliegt, wenn die Trägerschalen zusammengesetzt sind. Die Aufnahmefächer können von beiden Trägerschalen gemeinsam durch komplementäre Erhebungen, bzw. Aussparungen, gebildet werden oder auch ausschliesslich in einer der beiden Trägerschalen vorgesehen sein. Ein Anschlussgerät, das sich etwa an einem innen liegenden Kabelendbereich befindet, kann in einem solchen Aufnahmefach sicher aufbewahrt werden. Der Kabelendbereich ist entlang eines Führungskanals bis zum Aufnahmefach geführt, wobei der Führungskanal zwischen den beiden Trägerschalen ausgebildet ist. Zur Installation können die Trägerschalen nach dem Abwickeln des Kabels auseinander genommen werden, so dass das Anschlussgerät aus dem Aufnahmefach entnommen werden kann. Es können weitere Aufnahmefächer innerhalb des Spulenumfangsbereichs vorgesehen werden, die zusätzliche Geräte aufnehmen können, die z. B. bei der Installation des Kabel notwendig sind. Grundsätzlich kann auch ein am äusseren Kabelende angeschlossenes Endgerät in einem Aufnahmefach innerhalb des Spulenumfangsbereichs aufgenommen werden.

Zum lösbaren Halten eines innen liegenden Kabelendbereichs kann der Kabelträger an wenigstens einer Trägerschale entlang des Spulenumfangsbereichs eine Halterung für diesen Kabelendbereich aufweisen. Diese Halterung kann als Zugentlastung für ein Kabelende dienen, das z. B. an einem Anschlussgerät angeordnet ist, welches in einem Aufnahmefach im Inneren der Spuleneinheit untergebracht ist. Die Halterung kann beispielsweise durch einen oder mehrere Haltekanäle gebildet werden, der vom Spulenumfangsbereich nach innen in die Spuleneinheit abzweigt und wieder aus dem Spulenumfangsbereich heraus mündet. Die Halterung, bzw. die Haltekanäle, bildet dadurch eine Schikane in der das Kabel auch bei starkem Zug gehalten werden kann. Die Haltekanäle können z. B. durch parallel zum Spulenumfangsbereich verlaufende Erhebungen in Form von Haltestegen gebildet werden, die von der Basisfläche der Trägerschalen abragen. Die Haltestege sind Teil der Spuleneinheit und begrenzen den Spulenumfangsbereich. Ein Kabelendbereich kann wellenartig um diese Haltestege gelegt werden, so dass bei Zug am Kabel eine Klemm- bzw. Reibwirkung innerhalb der Haltekanäle, bzw. an den Flächen der Haltestege, entsteht. Die Haltestege weisen hierfür vorzugsweise gerundete Aussenflächen auf, die einem möglichen Biegeradius eines aufgewickelten optischen Kabels entsprechen, so dass das Kabel durch die Wellenführung nicht beeinträchtigt wird. Die Halterung, bzw. die Haltekanäle und Haltestege, können wiederum spiegelsymmetrisch an den beiden Trägerschalen ausgebildet sein.

Der Kabelträger kann eine zentrale Vertiefung in wenigstens einer der Trägerschalen oder eine zentrale Durchgangsöffnung durch beide Trägerschalen aufweisen. Die Vertiefung oder Durchgangsöffnung kann als Drehachse beim Drehen des Kabelträgers während einem Abwickeln des Kabels dienen. Vorzugsweise ist eine Lagereinrichtung vorgesehen, die in die Vertiefung, bzw. die Durchgangsöffnung, ragt und auf der der Kabelträger drehbar gelagert ist. Es kann z. B. auch ein längliches Werkzeug, wie etwa ein Schraubenzieher oder dergleichen, als Lagerung verwendet werden, so dass der Kabelträger bei Zug am Kabel auf dem Werkzeug dreht. Eine Lagereinrichtung hat den Vorteil, dass der Kabelträger während einer Abwickeldrehung positioniert gehalten werden kann.

Im Gebrauch kann ein Kabel, insbesondere ein optisches Kabel mit einem Anschlussgerät an beiden Enden, in aufgerolltem Zustand in einer ersten Trägerschale in den Bereich des Kabelfachs eingelegt werden. Das am innen liegenden Kabelende angeordnete Anschlussgerät kann in ein Aufnahmefach innerhalb des Spulenumfangsbereichs eingelegt werden. Der zugehörige Kabelendbereich wird in die Halterung, d. h. zwischen die Haltestege wellenartig in deren Haltekanälen eingesetzt. Das am aussen liegenden Kabelende angeordnete Anschlussgerät kann in das Haltemittel am Randbereich der Umfangswand eingebracht werden. Alternativ kann dieses Kabelende auch in ein Aufnahmefach innerhalb des Spulenumfangsbereichs eingelegt werden. Anschliessend kann die zweite Trägerschale spiegelsymmetrisch auf die erste Trägerschale aufgesetzt und mittels der Verbindungseinrichtung lösbar mit dieser verbunden werden. Das Kabel ist nun innerhalb des Kabelfachs angeordnet und von allen Seiten, d. h. vom Spulenumfangsbereich und den Umfangswänden, umgeben.

Zum Transport und zur Aufbewahrung kann der Kabelträger in eine Folie eingeschweisst werden, die vor einer Installation des Kabels entfernt wird. Die Folie deckt den Umfangsschlitz ab. Zudem kann die Folie einen Tragegriff aufweisen, an dem ein Kabelträger leicht ergriffen werden kann. Das aussen liegende Kabelende kann aus dem Haltemittel am Rand der Umfangswand entnommen werden. Alternativ kann der Kabelträger vorübergehend geöffnet werden, um das Kabelende aus einem Aufnahmefach innerhalb des Spulenumfangsbereichs zu entnehmen. Zur Installation kann der Kabelträger auf der Lagereinrichtung positioniert werden. Während am aussen liegenden Kabelende gezogen wird, dreht sich der Kabelträger auf der Lagereinrichtung und das Kabel wird entlang des Umfangsschlitzes ausgerollt. Sobald das Kabel vollständig abgewickelt ist, können die Trägerschalen geöffnet werden und das innen liegende Kabelende samt Anschlussgerät kann aus dem Haltemittel und dem Aufnahmefach entnommen werden.

Die Erfindung bezieht sich zudem auf die Anordnung aus einem Kabelträger und einem in dem Kabelträger gelagertes Kabel, wie oben beschrieben. Vorzugsweise kann an dem Kabel bereits ein Endgerät, ein Stecker oder dergleichen angeschlossen sein oder diese können getrennt vom Kabel in oder am Kabelträger untergebracht sein. Ferner können weitere Elemente, die zur Installation eines Kabels notwendig sind, wie z. B. eine Montageplatte, im oder am Kabelträger angeordnet werden. Diese zusätzlichen Elemente können ebenfalls zur erfindungsgemässen Anordnung gehören.

Der erfindungsgemässe Kabelträger und die entsprechende Anordnung bieten eine platzsparende Aufbewahrung für ein Kabel und dessen Anschlüsse. Der Raum innerhalb der Kabelrolle kann zur Unterbringung von weiteren Geräten und zur Handhabung des Kabelträgers genutzt werden. Die flache Bauweise des Kabelträgers erlaubt eine einfache Stapelung mehrer Kabelträger übereinander. Hierfür können Positionierungshilfen auf der Stapelfläche, wie Anschlagkanten oder dergleichen, vorgesehen werden. Nach der Verwendung des Kabelträgers können die beiden Trägerschalen formschlüssig in einander gelegt werden, so dass nur ein geringes Volumen entsorgt werden muss.

### KURZE BESCHREIBUNG DER ZEICHNUNGEN

Eine bevorzugte Ausführungsform der Erfindung wird im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1:: eine dreidimensionale Aufsicht auf einen erfindungsgemässen Kabelträger,
- Fig. 2:: dreidimensionale Innenansicht der Trägerschale des Kabelträgers aus Figur 1,
- Fig. 3:: dreidimensionale Ansicht des Kabelträgers in einem aufgeklappten Zustand,
- Fig. 4:: eine Aufsicht nach Figur 1 mit einem teilweise ausgezogenen Kabel,
- Fig. 5:: eine Innenansicht der Trägerschale aus Figur 2 von oben und
- Fig. 6:: einen Längsschnitt entlang einer Längsachse des Kabelträgers aus Figur 1.

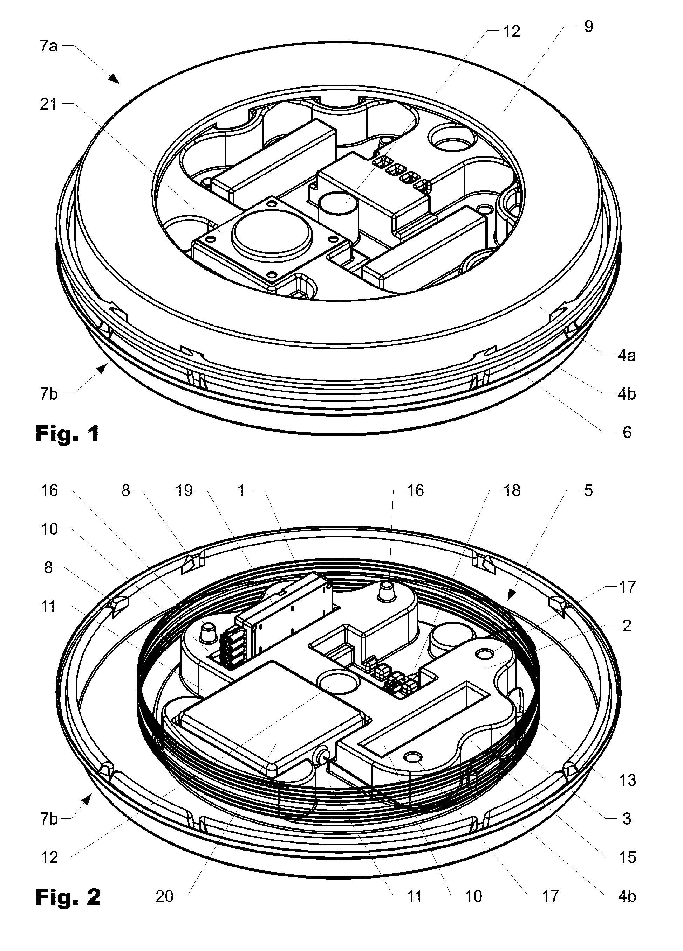

In den Figur 1 und 2 ist ein Kabelträger nach der vorliegenden Erfindung gezeigt, der als Transportmittel und Montagehilfe für ein aufwickelbares optisches Kabel 1 dient. Der Kabelträger bildet gemeinsam mit dem Kabel eine Anordnung nach der vorliegenden Erfindung. Der Kabelträger umfasst eine Spuleneinheit 2 um deren Spulenumfangsbereich 3 das Kabel in Schlaufen aufgewickelt ist. Von einem ersten und einem zweiten gegenüberliegenden Ende der Spuleneinheit ragt jeweils eine Umfangswand 4a und 4b über den Spulenumfangsbereich. Der Spulenumfangsbereich 3 und die Umfangswände 4a und 4b bilden gemeinsam ein Kabelfach 5 aus, in dem das Kabel 1 untergebracht werden kann. Zwischen den Umfangswänden 4a und 4b befindet sich ein um den Spulenumfangsbereich 3 umlaufender Umfangsschlitz 6 zum Abwickeln des Kabels aus dem Kabelfach 5.

Der Kabelträger ist aus zwei Trägerschalen 7a und 7b aufgebaut, die als einstückige, flache und kreisförmige Bauteile gefertigt sind, an welchen alle Einrichtungen zur Kabelführung innerhalb des Kabelträgers durch Erhebungen aus einer Basisfläche 9 ausgeformt sind. Von dieser Basisfläche sind z. B. die Umfangswände 4a und 4b, das Kabelfach 5 sowie weitere Führungs- und Halteeinrichtung und Aufnahmefächer nach innen in den Kabelträger hineinragend eingelassen. Die Basisflächen der Trägerschalen bilden zudem das erste und zweite Ende der Spuleneinheit 2.

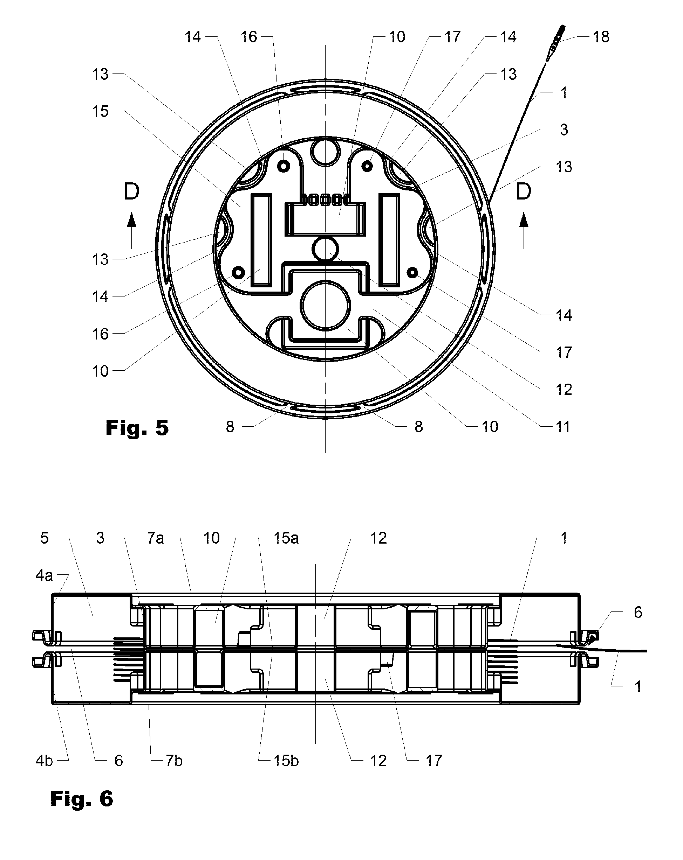

Figur 2 zeigt das Innere der Trägerschale 7b. Die Umfangswand 4b weist einen ersten Bereich, der im Wesentlichen senkrecht zum Spulenumfangsbereich 3, und einen zweiten Bereich auf, der im Wesentlichen parallel und konzentrisch zum Spulenumfangsbereich 3 verlauft, so dass der zweite Bereich über den Spulenumfangsbereich 3 ragt. Der erste Bereich kann ein Teil der Basisfläche 9 sein. In einem Randbereich der Umfangswand 4b sind Haltemittel in Form von Einkerbungen 8 vorgesehen, die einen Endbereich eines Kabels 1 halten können. Die Spuleneinheit 2, bzw. der Spulenumfangsbereich 3, wird durch Erhebungen aus der Basisfläche 9 gebildet, die zentral um den Mittelpunkt der Trägerschale 4b angeordnet sind und einen zylindrischen Bereich bilden. Auf diese Weise werden im Inneren des Spulenumfangsbereichs 3 mehrere Aufnahmefächer 10, Führungskanäle 11 und eine zentrale Öffnung 12 ausgebildet. Im Bereich des Spulenumfangsbereichs 3 sind mehrere Schikanen 13 in Form von Haltestegen vorgesehen, die von der Basisfläche 9 nach innen ragen und Haltekanäle 14 ausbilden (siehe Figur 5), die vom Spulenumfangsbereich nach innen abzweigen und wieder aus dem Spulenumfangsbereich heraus münden. Die Haltekanäle 14 bilden eine Halterung für einen innen liegenden Kabelendbereich, d. h. für das Kabelende, das beim Abwickeln zunächst innerhalb des Kabelträgers verbleibt und am weitesten innen zur Mitte des Kabelträgers zu liegen kommt. Wie aus Figur 5 ersichtlich ist, bilden die Haltestege 13 einen Teil des Spulenbereichs 2 und formen die Haltekanäle 14 wellenförmig am Spulenumfangsbereich 3. Der Endbereich des Kabels kann daher wellenförmig entlang dieser Haltekanäle geführt werden.

Die Erhebungen von der Basisfläche 9 schliessen mit einer Verbindungsfläche 15 ab, in welche die Aufnahmefächer 10 und Führungskanäle 11 eingelassen sind. In der Verbindungsfläche 15 sind Vorsprünge 16 und Vertiefungen 17 angeordnet, die als Verbindungseinrichtungen zur Verbindung der Trägerschalen dienen. Die Spuleneinheit 2 innerhalb der Trägerschalen ist im Wesentlichen symmetrisch zu einer Fläche durch die Mittelachse der Schalen ausgebildet. Auf diese Weise kommen die Vorsprünge 16 der Trägerschale 7a gegenüber den Vertiefungen 17 der Trägerschale 7b zu liegen, wenn die Schalen mit ihren jeweiligen Verbindungsflächen 15 auf einander zu liegen kommen. Dann können die Vorsprünge 16 der Trägerschale 7a in die Vertiefungen 17 der Trägerschale 7b kraftschlüssig eingreifen und umgekehrt, so dass die Trägerschalen lösbar mit einander verbunden sind und gemeinsam den Kabelträger bilden.

In einem der Aufnahmefächer 10 ist eine Steckerkassette 19 und in einem weiteren Aufnahmefach ist ein Anschlussgerät 20 eingesetzt, das an ein innen liegendes Kabelende angeschlossen ist. In noch einem weiteren Aufnahmefach ist ein Stecker 18 gelagert, der an einem aussen liegenden Kabelende angeschlossen ist. Ferner wird an einer Aussenseite der Trägerschale 7a eine Grundplatte 21 aufbewahrt, die zur Montage des Anschlussgeräts 20 an einer Wand dient. Die Grundplatte 21 kann z. B. durch einen Klemmsitz auf der Trägerschale 7a gehalten werden. Durch das Einschweissen des Kabelträgers in eine Folie kann die Grundplatte zusätzlich am Kabelträger gehalten werden.

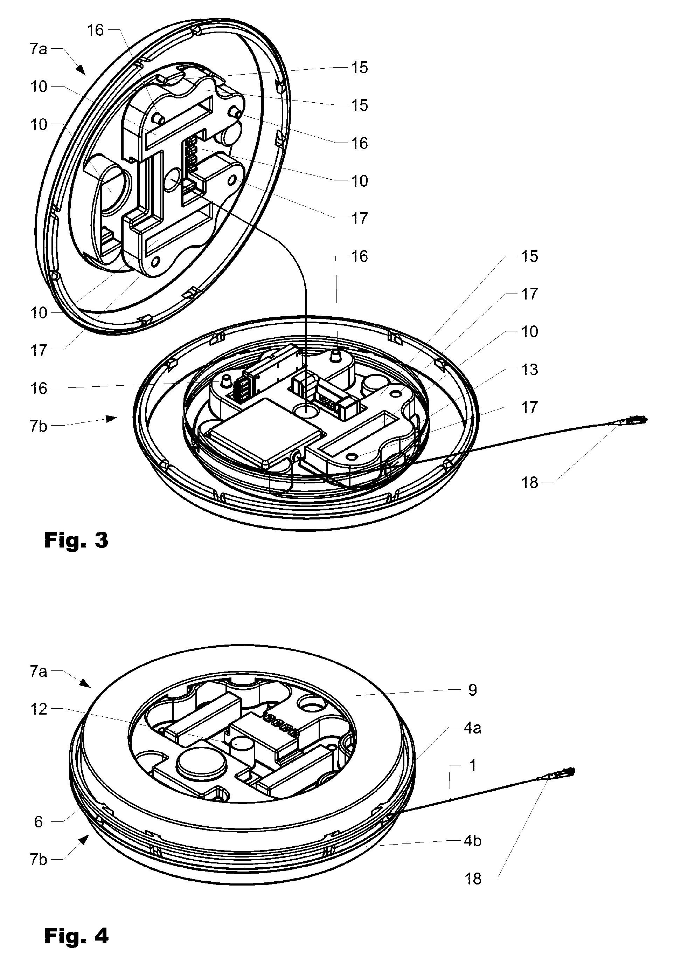

In Figur 3 ist der Kabelträger mit aufgeklappten Trägerschalen 7a und 7b gezeigt, so dass diese von innen sichtbar sind. Die Trägschale 7b ist wie oben an Hand der Figur 2 beschrieben ausgebildet. Die Trägerschale 7a ist im Wesentlichen spiegelsymmetrisch zu einer senkrecht zur Mittelachse verlaufenden Ebene ausgebildet. Lediglich die Position der Vorsprünge 16 und Vertiefungen 17 ist vertauscht. Die Trägerschale 7a ergänzt somit die Aufnahmefächer 10 der Trägerschale 7b und kann diese verschliessen. Die Führungskanäle 11 sind ebenfalls komplementär ausgeformt. In auf einander gelegtem Zustand der Trägerschalen 7a und 7b ergänzen sich die gegenüber liegenden Erhebungen der Trägerschalen 7a und 7b und bilden gemeinsam die Spuleneinheit 2, bzw. der Spulenumfangsbereich 3, und das Kabelfach 5.

In Figur 6 ist ein Längsschnitt durch den erfindungsgemässen Kabelträger gemäss der Linie D aus Figur 5 gezeigt. Die beiden Trägerschalen 7a und 7b liegen mit ihren Verbindungsflächen 15a und 15b auf einander. Die Umfangswände 4a und 4b ragen vom Spulenumfangsbereich 3 zunächst senkrecht ab und verlaufen dann parallel zum Spulenumfangsbereich, so dass die Wände 4a und 4b im Randbereich parallel zu einander liegen. Zwischen den Randbereichen der Umfangswände 4a und 4b ist der Umfangsschlitz 6 ersichtlich. Die Aufnahmefächer 10 und die Öffnung 12 der Trägerschalen 7a und 7b kommen einander gegenüber zu liegen.

In Figur 4 ist der Kabelträger aus Figur 1 mit herausgenommenem Ende des Kabels 1 und daran angeschlossenem Stecker gezeigt. Das Kabel 1 ragt aus dem Umfangsschlitz 6 heraus. Der Kabelträger kann mit der Öffnung 12 auf einer Lagereinrichtung (nicht dargestellt) drehbar gelagert sein. Durch Ziehen am Kabel 1 dreht der Kabelträger mit samt dem im Kabelfach aufgewickelten Kabel auf der Lagereinrichtung, so dass das Kabel 1 abgewickelt werden kann. Dabei ist es vorteilhaft, dass der aufgewickelte Kabelteil relativ zum Kabelträger in Ruhe bleibt und nur der gerade abzuwickelnde Kabelteil aus dem Umfangsschlitz 6 heraus bewegt wird. In Bezug auf den Kabelträger wird dieser abzuwickelnde Kabelteil rings um den Kabelträger aus dem rundum verlaufenden Umfangsschlitz 6 ausgegeben.

Sobald das gesamte Kabel abgewickelt ist, kann die Trägerschale 7a von der Trägerschale 7b abgenommen werden und das am inneren Kabelende angebrachte Anschlussgerät 20 und die Steckerkassette 19 aus dem Kabelträger entnommen werden. Die nun leeren Trägerschalen 7a und 7b können zur Entsorgung platzsparend in einander gelegt werden.

### BEZUGSZEICHENLISTE

- 1: Kabel
- 2: Spuleneinheit
- 3: Spulenumfangsbereich
- 4a, 4b: Umfangswand
- 5: Kabelfach
- 6: Umfangsschlitz
- 7a, 7b: Trägerschalen
- 8: Einkerbungen
- 9: Basisfläche
- 10: Aufnahmefach
- 11: Führungskanäle
- 12: Öffnung
- 13: Haltestege
- 14: Haltekanäle
- 15: Verbindungsflächen
- 16: Vorsprung
- 17: Vertiefung
- 18: Stecker
- 19: Steckerkassette
- 20: Anschlussgerät
- 21: Grundplatte

## Patentansprüche

1. Kabelträger als Transportmittel und Montagehilfe mit einer Spuleneinheit (2) um deren Spulenumfangsbereich (3) ein Kabel (1) aufwickelbar ist, wobei von einem ersten und einem zweiten axial gegenüberliegenden Ende der Spuleneinheit (2) jeweils eine Umfangswand (4a, 4b) zumindest teilweise über den Spulenumfangsbereich (3) abragt und ein vom Spulenumfangsbereich (3) und den Umfangswänden (4a, 4b) ausgebildetes Kabelfach (5) einen um den Spulenumfangsbereich (3) umlaufenden Umfangsschlitz (6) zum Abwickeln des Kabels aus dem Kabelfach (5) aufweist,
wobei der Kabelträger aus zwei Trägerschalen (7a, 7b) zusammengesetzt ist, **dadurch gekennzeichnet, dass** in wenigstens einer Trägerschale (7a; 7b) innerhalb des Spulenumfangsbereichs wenigstens ein Aufnahmefach (10) zur Aufnahme und Entnahme eines an einem Kabelende angeordneten Anschlussgeräts (20) ausgebildet ist, und dass zwischen den beiden Trägerschalen (7a; 7b) ein Führungskanal (11) ausgebildet ist, entlang welchem das Kabel bis zum Aufnahmefach (10) geführt werden kann.

2. Kabelträger nach Anspruch 1 oder 2, **dadurch gekennzeichnet, dass** die Trägerschalen (7a, 7b) zumindest im Umfangsbereich des Kabelfachs (5) spiegelsymmetrisch ausgebildet sind.

3. Kabelträger nach einem der vorhergehenden Ansprüche, **dadurch gekennzeichnet, dass** die zwei Trägerschalen (7a, 7b) in verbundenem Zustand gemeinsam den Spulenumfangsbereich (3) ausbilden.

4. Kabelträger nach einem der vorhergehenden Ansprüche, **dadurch gekennzeichnet, dass** die zwei Trägerschalen (7a, 7b) in verbundenem Zustand zwischen sich den Umfangsschlitz (6) ausbilden.

5. Kabelträger nach einem der vorhergehenden Ansprüche, **dadurch gekennzeichnet, dass** eine Verbindungsvorrichtung (16, 17) vorgesehen ist, mit der die zwei Trägerschalen (7a, 7b) lösbar verbindbar sind.

6. Kabelträger nach Anspruch 5, **dadurch gekennzeichnet, dass** die Verbindungsvorrichtung als kraftschlüssige Verbindung ausgebildet ist.

7. Kabelträger nach einem der vorhergehenden Ansprüche, **dadurch gekennzeichnet, dass** wenigstens eine Trägerschale (7a; 7b) entlang des Spulenumfangsbereichs (3) eine Halterung (13; 14) zum lösbaren Halten eines innen liegenden Kabelendbereichs aufweist.

8. Kabelträger nach Anspruch 7, **dadurch gekennzeichnet, dass** die Halterung durch einen oder mehrere Haltekanäle (14) gebildet wird, der vom Spulenumfangsbereich (3) nach innen abzweigt und wieder aus dem Spulenumfangsbereich heraus mündet.

9. Kabelträger nach einem der vorhergehenden Ansprüche, **dadurch gekennzeichnet, dass** an einem Randbereich wenigstens einer Umfangswand (4a; 4b) ein Haltemittel (8) für einen aussen liegenden Kabelendbereich angeordnet ist.

10. Kabelträger nach einem der vorhergehenden Ansprüche, **dadurch gekennzeichnet, dass** eine zentrale Vertiefung in wenigstens einer der Trägerschalen oder eine zentrale Durchgangsöffnung (12) durch beide Trägerschalen (7a, 7b) vorgesehen ist.

11. Kabelträger nach Anspruch 10, **dadurch gekennzeichnet, dass** eine Lagereinrichtung vorgesehen ist, die in die Vertiefung, bzw. die Durchgangsöffnung (12), ragt und auf der die Trägerschalen (7a, 7b) drehbar gelagert sind.

12. Kabelträger nach einem der vorhergehenden Ansprüche, **dadurch gekennzeichnet, dass** eine abnehmbare Folie den Kabelträger umschliesst.

13. Anordnung zur Aufbewahrung und/oder Installation eine Kabels (1), die einen Kabelträger nach einem der vorhergehenden Ansprüche und ein in dem Kabelträger gelagertes Kabel (1) umfasst.

## Claims

1. A cable carrying device as a means of transportation and as an assembly aid having a coil unit (2), around the coil circumference area (3) of which a cable (1) can be wound, wherein from a first and a second axially opposite end of the coil unit (2) in each case a circumferential wall (4a, 4b) protrudes at least partially beyond the coil circumference area (3), and a cable compartment (5) formed by the coil circumference area (3) and the circumferential walls (4a, 4b) has a circumferential slot (6) extending around the coil circumference area (3) for unwinding the cable from the cable compartment (5),
wherein the cable carrying device is composed of two carrier shells (7a, 7b), **characterised in that** in at least one carrier shell (7a; 7b) at least one storage compartment (10) for receiving and removing a connection device (20) provided on a cable end is formed within the coil circumference area, and **in that** a guide channel (11) is provided between the two carrier shells (7a; 7b), along which the cable can be guided to the storage compartment (10).

2. The cable carrying device as claimed in claim 1 or 2, **characterised in that** the carrier shells (7a, 7b) are formed to be mirror-symmetrical at least in the circumference area of the cable compartment (5).

3. The cable carrying device as claimed in any one of the preceding claims, **characterised in that** in the connected configuration, the two carrier shells (7a, 7b) together form the coil circumference area (3).

4. The cable carrying device as claimed in any one of the preceding claims, **characterised in that** in the connected configuration, the two carrier shells (7a, 7b) form the circumferential slot (6) between them.

5. The cable carrying device as claimed in any one of the preceding claims, **characterised in that** a connection device (16, 17) is provided, by means of which the two carrier shells (7a, 7b) can be releasable connected.

6. The cable carrying device as claimed in claim 5, **characterised in that** the connection device is formed as a force-locking connection.

7. The cable carrying device as claimed in any one of the preceding claims, **characterised in that** at least one carrier shell (7a; 7b) has, along the coil circumference area (3), a retainer (13; 14) for releasable retaining an inwardly positioned cable end area.

8. The cable carrying device as claimed in claim 7, **characterised in that** the retainer is formed by one or more retaining channels (14) that branch off towards the inside from the coil circumference area (3) and leads back out of the coil circumference area.

9. The cable carrying device as claimed in any one of the preceding claims, **characterised in that** a retention means (8) for an externally located cable end area is provided at an edge area of at least one circumferential wall (4a; 4b).

10. The cable carrying device as claimed in any one of the preceding claims, **characterised in that** a central recess is provided in at least one of the carrier shells or a central through-opening (12) through both carrier shells (7a, 7b) is provided.

11. The cable carrying device as claimed in claim 10, **characterised in that** a bearing apparatus is provided that protrudes into the recess or the through-opening (12), respectively, and has the carrier shells (7a, 7b) rotatable supported thereon.

12. The cable carrying device as claimed in any one of the preceding claims, **characterised in that** the cable carrying device is surrounded by a removable foil.

13. An assembly for storing and/or installing a cable (1), which comprises a cable carrying device as claimed in any one of the preceding claims and a cable (1) that is supported in the cable carrying device.

## Revendications

1. Support de câbles en tant que moyen de transport et d'auxiliaire de montage, avec une unité de bobine (2) sur la région de pourtour de bobine (3) de laquelle peut être enroulé un câble (1), dans lequel une paroi périphérique (4a, 4b) fait respectivement au moins partiellement saillie au-delà de la région de pourtour de bobine (3) à partir d'une première extrémité et d'une deuxième extrémité axialement opposée de l'unité de bobine (2), et un compartiment à câble (5) formé par la région de pourtour de bobine (3) et les parois périphériques (4a, 4b) comporte une fente périphérique (6) entourant la région de pourtour de bobine (3), pour le déroulement du câble hors du compartiment à câble (5), le support de câble étant composé de deux coques de support (7a, 7b), **caractérisé en ce qu'**il est prévu au moins un compartiment de réception (10) dans au moins une coque de support (7a ; 7b) dans la région de pourtour de bobine, pour la réception et le retrait d'un appareil de raccordement (20) agencé à une extrémité de câble, et **en ce qu'**il est prévu un canal de guidage (11) entre les deux coques de support (7a, 7b), le long duquel le câble peut être guidé jusqu'au compartiment de réception (10).

2. Support de câble selon la revendication 1 ou 2, **caractérisé en ce que** les coques de support (7a, 7b) sont disposés de façon symétrique, au moins dans la région périphérique du compartiment à câble (5).

3. Support de câble selon l'une des revendications précédentes, **caractérisé en ce qu'**à l'état assemblé, les deux coques de support (7a, 7b) forment conjointement la région de pourtour de bobine (3).

4. Support de câble selon l'une des revendications précédentes, **caractérisé en ce qu'**à l'état assemblé, les deux coques de support (7a, 7b) forment la fente périphérique (6) entre elles.

5. Support de câble selon l'une des revendications précédentes, **caractérisé en ce qu'**il est prévu un dispositif d'assemblage (16, 17) permettant de relier de façon séparable les deux coques de support (7a, 7b).

6. Support de câble selon la revendication 5, **caractérisé en ce que** le dispositif d'assemblage est conçu comme un assemblage par adhérence.

7. Support de câble selon l'une des revendications précédentes, **caractérisé en ce que** le long de la région de pourtour de bobine (3), au moins une coque de support (7a ; 7b) comporte une fixation (13 ; 14) pour la fixation amovible d'une région d'extrémité de câble située à l'intérieur.

8. Support de câble selon la revendication 7, **caractérisé en ce que** la fixation est formée par un ou plusieurs canaux de maintien (14) bifurquant vers l'intérieur à partir de la région de pourtour de bobine (3) et ressortant de la région de pourtour de bobine.

9. Support de câble selon l'une des revendications précédentes, **caractérisé en ce que** sur une région de bord d'au moins une paroi périphérique (4a ; 4b), il est prévu un moyen de retenue (8) pour une région d'extrémité de câble située à l'extérieur.

10. Support de câble selon l'une des revendications précédentes, **caractérisé en ce qu'**il est prévu un renfoncement central dans au moins l'une des coques de support, ou une ouverture de passage centrale (12) à travers les deux coques de support (7a, 7b).

11. Support de câble selon la revendication 10, **caractérisé en ce qu'**il est prévu un dispositif de palier faisant saillie dans le renfoncement ou respectivement dans l'ouverture de passage (12), sur lequel les coques de support (7a, 7b) sont montées de façon rotative.

12. Support de câble selon l'une des revendications précédentes, **caractérisé en ce qu'**une feuille amovible enveloppe le support de câble.

13. Dispositif pour le rangement et/ou l'installation d'un câble (1), comprenant un support de câble selon l'une des revendications précédentes et un câble (1) disposé dans le support de câble.
